**Europäisches Patentamt**

**European Patent Office**

**Office européen des brevets**

(19)

(11) Numéro de publication: **0 287 410**
**B1**

(12) # FASCICULE DE BREVET EUROPEEN

(45) Date de publication du fascicule du brevet:
**28.02.90**

(51) Int. Cl.⁴: **B60B 27/00**

(21) Numéro de dépôt: **88400610.7**

(22) Date de dépôt: **15.03.88**

(54) **Bague extérieure pour roulement de moyeu de véhicule poids lourd et ensemble de moyeu comportant une telle bague.**

(30) Priorité: **19.03.87 FR 8703797**

(43) Date de publication de la demande:
**19.10.88 Bulletin 88/42**

(45) Mention de la délivrance du brevet:
**28.02.90 Bulletin 90/9**

(84) Etats contractants désignés:
**DE ES FR GB IT**

(56) Documents cités:
**DE-A- 1 917 168**
**GB-A- 2 095 346**
**US-A- 1 451 825**

(73) Titulaire: **TRAILOR S.A., 3 route nationale 10 "Le Gibet"**
**Coignières, F-78311 Maurepas Cedex(FR)**

(72) Inventeur: **Huvelle, Jean-Paul, 7, Lotissement du Bois de**
**Mondon, F-54300 Moncel-les-Luneville(FR)**

(74) Mandataire: **Kügele, Bernhard et al, NOVAPAT**
**FRANCE 63 bis, boulevard Bessières, F-75017 Paris(FR)** -

**Description**

La présente invention est relative aux moyeux de roues des véhicules industriels poids lourds.

Selon la règlementation en vigueur, la charge maximale par essieu d'un véhicule poids lourd varie entre 8 et 13 tonnes.

En conséquence, pour tous les véhicules plus lourds, les constructeurs sont contraints de multiplier le nombre des essieux afin de rester dans les limites imposées.

Il est par ailleurs connu que lorsque le tonnage d'un véhicule augmente, le diamètre des tambours de freins et le diamètre du cercle sur lequel sont les axes (boulons) de fixation de la roue au moyeu doivent également être augmentés.

Par contre, pour des raisons technologiques la dimension maximale des roulements de moyeux qu'il soit possible de fabriquer d'une façon économiquement rentable est limitée et aucun des quelques fabricants spécialisés ne peut réaliser des roulements dont la bague externe présente un diamètre supérieur à une dimension maximale qui est d'environ 230 mm pour le diamètre des fusées qui est d'environ 80 mm. Le voile du tambour de frein dont la largeur est constituée par une surface délimitée entre l'ouverture centrale et la périphérie du tambour permet d'assurer sa liaison à la roue.

Pour un tambour de grand diamètre l'ouverture centrale sera grande pour économiser la matière mais raisonnablement pour maintenir la dimension du voile dans une limite suffisante de résistance.

Pour des raisons évidentes de caractéristiques mécaniques de la matière, ce voile ne peut constituer une liaison suffisamment résistante d'une part avec la roue associée et d'autre part avec le moyeu proprement dit.

Il en résulte l'obligation d'intercaler une pièce intermédiaire de forme compliquée entre la bague externe du roulement et le voile du tambour.

Le document GB-A 2 095 346 montre une bague selon le préambule de la revendication 1.

Le but de l'invention est de permettre la réalisation d'un roulement de moyeu d'une dimension nettement supérieure ayant une bague externe également plus grande, réalisable d'une façon technologiquement simple et donc peu coûteuse, afin de pouvoir supprimer ladite pièce intermédiaire.

Pour atteindre ces buts, l'invention a pour objet une bague extérieure de roulement de moyeu selon la revendication 1.

Suivant une autre caractéristique de l'invention, les diamètres desdites surfaces cylindriques sont constants.

Suivant une variante avantageuse, ladite première plage présente un second épaulement délimitant avec ladite couronne une surface annulaire de portée pour recevoir la tranche du voile du tambour, cette surface ayant une largeur un peu inférieure à l'épaisseur dudit voile.

L'invention a également pour objet un ensemble de moyeu pour véhicule poids lourd comportant un roulement ayant une telle bague extérieure.

La description qui va suivre, en regard des dessins annexés à titre d'exemples non limitatifs, permettra de bien comprendre comment l'invention peut être mise en pratique.

La figure 1 est une vue partielle en coupe d'un ensemble de moyeu suivant l'invention.

La figure 2 est une vue d'une autre bague externe de roulement, suivant l'invention.

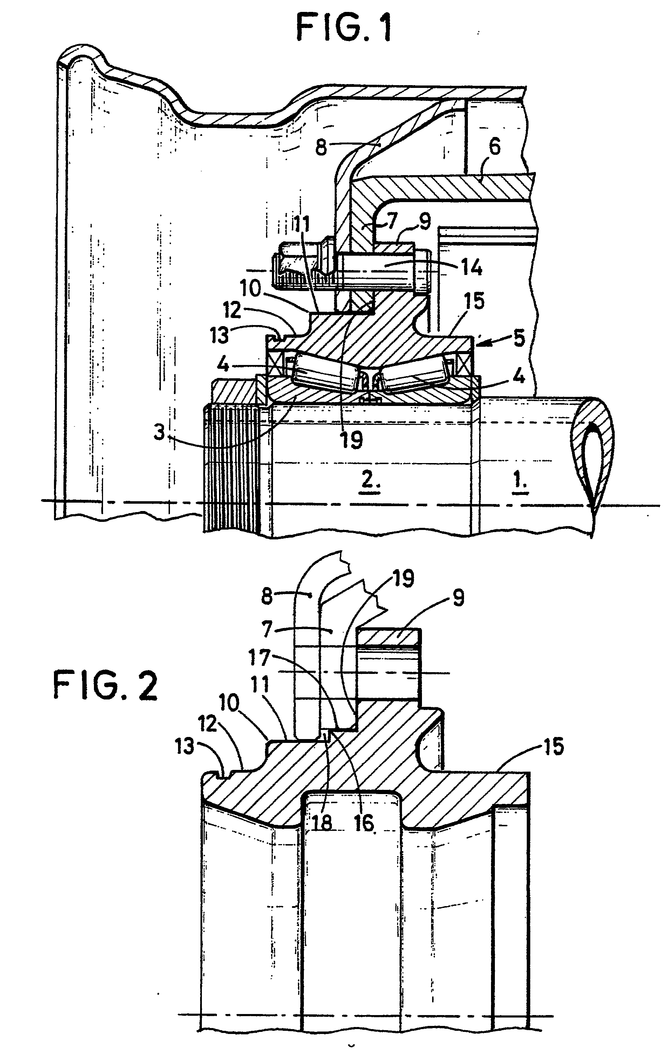

En se référant à la figure 1, on a représenté un ensemble de moyeu pour roue d'un véhicule poids lourd d'un tonnage supérieur à la limite réglementaire pour un seul essieu.

Cet ensemble comprend un essieu 1 par exemple tubulaire ayant une fusée 2 d'un diamètre supérieur à 80 mm, sur laquelle est monté un roulement de type classique ayant une bague intérieure 3, des rouleaux coniques 4 et une bague extérieure 5, un tambour de frein 6 ayant un voile 7 et une roue ayant un voile 8 portant une jante.

Suivant l'invention le voile 7 du tambour et celui 8 de la roue sont fixés directement sur la bague extérieure 5, sans aucune pièce intermédiaire.

Dans ce but, la bague extérieure 5, qui a un diamètre bien supérieur à celui des bagues les plus grandes dont la fabrication est actuellement possible avec un prix compétitif, comporte une surface externe présentant une bride, ou couronne radiale externe 9 perpendiculaire à l'axe du roulement ayant une surface radiale 19 située dans un plan à peu près médian du roulement et qui délimite sur cette surface externe avec l'extrémité de la bague située vers l'extrémité de la fusée une première plage présentant un épaulement 10 séparant deux surfaces cylindriques de diamètres différents dont la première, désignée par la référence 11 entre la couronne et l'épaulement 10 a le plus grand diamètre et la seconde désignée par la référence 12 entre ce dernier et l'extrémité opposée à la couronne par rapport à cet épaulement a un diamètre plus petit, ces diamètres étant constants.

La seconde surface, 12, présente de façon commode, et comme connu en soi une gorge 13 pour l'enclenchement d'un chapeau d'essieu.

La couronne 9 délimite également une seconde plage 15 s'étendant vers l'essieu 1 et ayant une surface cylindrique dont le diamètre est également constant et à peu près égal à celui de ladite seconde surface de la première plage.

Grâce à cette forme simple et géométrique, l'usinage d'une telle pièce est considérablement facilité et peut être effectué de façon économique malgré la taille de la pièce.

Comme représenté à la figure 1, la première surface 11 sert de portée pour les tranches des voiles 7 du tambour et 8 de la roue qui sont serrés sur la couronne 9 au moyen de goujons 14.

Dans une variante, qui peut se révéler plus facile pour le montage, en raison notamment des tolérances de fabrication qui peuvent rendre l'adjustement difficile, il peut être prévu, comme représenté à la figure 2, un second épaulement 16 sur ladite première plage, qui délimite sur la première surface 11 une petite portée cylindrique 17 dont la largeur est un peu inférieure à l'épaisseur du voile 7 du tambour de frein, ménageant ainsi un petit intervalle 18 qui facilite le serrage du voile 8 de la roue, tout en facilitant également l'adjustement du voile du tambour.

L'usinage de ce petit épaulement ne présentant pas de difficulté particulière ne grève pas le prix de revient de la pièce.

Bien entendu, dans cette variante, il est également prévu la seconde plage 15 et, en outre, dans ces deux exemples, la surface intérieure de la bague est conformée de façon appropriée pour coopérer avec les organes de roulement (billes, galets ou autres) de façon connue.

La bague extérieure de roulement de moyeu suivant l'invention étant réalisable industriellement d'une façon économique permet ainsi de fabriquer des roulements ayant un alésage bien supérieur à 80 mm, qui n'étaient pas commercialisés jusqu'à présent, et de supprimer la pièce intermédiaire entre la bague extérieure du roulement et les voiles du tambour et de la roue.

Dans les deux modes de réalisation les voiles du tambour et de la roue sont situés à peu près dans le plan médian du roulement de sorte que, d'une part, le poids est régulièrement réparti sur celui-ci et que, d'autre part, l'ensemble résiste parfaitement aux efforts latéraux.

## Revendications

1. Bague extérieure de roulement de moyeu pour roue et essieu de véhicule industriel poids lourd ayant un tambour de frein et une fusée de fort diamètre, supérieur à 80 mm, la surface externe de ladite bague extérieure présentant une bride, ou couronne radiale externe, ladite couronne (9) étant dans sa totalité perpendiculaire à l'axe du roulement et présentant une surface radiale plane (19) pour une fixation directe sur elle du voile (7) du tambour (6) et de celui (8) de la roue, l'agencement étant tel que ladite surface radiale est située dans un plan à peu près médian du roulement ladite surface plane de la couronne délimitant sur ladite surface externe une première plage s'étendant en direction de l'extrémité de la fusée (2) et présentant au moins un épaulement (10) délimitant avec la couronne (9) une première surface cylindrique axiale (11) ayant un premier diamètre, caractérisée en ce qui il y a dans la direction opposée une seconde surface cylindrique axiale (12) qui a un second diamètre qui est inférieur au premier, et une seconde plage qui s'étend vers le milieu de l'essieu et qui a une surface cylindrique (15) dont le diamètre est à peu près égal à celui de la seconde surface (12) de ladite première plage, et que le roulement de moyeu est un roulement à galets (4).

2. Bague suivant la revendication 1, caractérisée en ce que ladite première plage présente un second épaulement (16) délimitant avec ladite couronne (9) une surface annulaire (17) de portée pour recevoir la tranche du voile (7) du tambour, cette surface ayant une largeur un peu inférieure à l'épaisseur dudit voile.

3. Bague suivant l'une ou l'autre des revendications 1 ou 2, caractérisée en ce que les diamètres desdites surface cylindrique sont constants.

4. Ensemble de moyeu pour véhicule poids lourd destiné à être monté sur un essieu ayant une fusée d'un diamètre supérieur à 80 mm caractérisé en ce qu'il comporte un roulement ayant une bague extérieure telle que définie suivant les revendications 1 à 3.

## Claims

1. An outer ring for the hub bearing for wheel and axle of a heavy goods vehicle having a brake drum and a stub of large diameter, higher than 80 mm, the external surface of said outer ring including a flange, or outer radial collar, said collar (9) being entirely orthogonal to the bearing center line and comprising a plane radial surface (19) onto which are directly fixed the drum (6) body and the wheel body (8), the arrangement being such that said radial surface lies in a roughly median plane of said bearing, said collar plane surface defining on said external surface a first area extending towards the end of said stub (2) and having at least a shoulder (10) forming with said collar (9) a first axial cylindrical surface (11) of a first diameter, characterized in that there is provided in the direction opposed thereof a second axial cylindrical surface (12) of a second diameter lower than the first one, and a second area extending towards the middle portion of the axle and having a cylindrical surface (15) the diameter of which is roughly the same as that of the second surface (12) of said first area, and in that the hub bearing is a cylindrical roller bearing (4).

2. The ring of claim 1, characterized in that said first area shows a second shoulder (16) forming with said collar (9) an annular bearing surface (17) for receiving the edge of said drum body (7), said surface having a width slightly lower than said body thickness.

3. The ring of either claims 1 or 2, characterized in that diameters of said cylindrical surfaces are constant.

4. A hub assembly for heavy goods vehicle adapted to be installed on an axle having a stub with a diameter higher than 80 mm, characterized in that it includes a bearing having an outer ring according to claims 1–3.

## Patentansprüche

1. Außenring für ein Radnaben- und Radachsenlager eines industriellen Schwerfahrzeugs mit einer Bremstrommel und einem Achsschenkel größeren Durchmessers über 80 mm, wobei die äußere Fläche des Außenrings einen radialen äußeren Bund (9) hat, der insgesamt senkrecht zur Lagerachse verläuft und der eine zylindrische ebene Fläche (19) zur direkten Befestigung eines Flansches (7) der Trommel (6) und des Radflansches (8) hat, wobei die Anordnung derart ist, daß die radiale Fläche in einer Ebene etwa in der Mitte des Lagers liegt, und wobei die ebene Fläche des Bundes auf der äußeren Fläche ein erstes Profil begrenzt, das sich in Richtung des Endes des Achsschenkels (2) erstreckt und das wenigstens eine Schulter (10) hat, die zusammen mit dem Bund (9) eine erste zylindrische axiale Fläche (11) begrenzt, die einen ersten Durchmesser hat, dadurch gekennzeichnet, daß in der entgegengesetzten Richtung eine zweite zylindrische axiale Fläche (12) vorhanden ist, die einen zweiten Durchmesser hat, der geringer als der erste ist, sowie ein zweites Profil, das sich zur Mitte der Radachse erstreckt und das eine zylindrische Fläche (15) hat, deren Durchmesser gleich dem der zweiten Fläche (12) des ersten Profils ist und daß das Radachsenlager ein Rollenlager ist.

2. Ring nach Anspruch 1, dadurch gekennzeichnet, daß das erste Profil eine zweite Schulter (16) hat, die zusammen mit dem Bund (9) eine ringförmige Lagerfläche (17) zur Aufnahme des Endes des Trommelbundes (7) hat, wobei die Fläche eine Breite hat, die etwas geringer als die Dicke des Bundes ist.

3. Ring nach Anspruch 1 oder 2, dadurch gekennzeichnet, daß die Durchmesser der zylindrischen Flächen konstant sind.

4. Radnabenanordnung für ein Schwerfahrzeug zur Montage an einer Radachse mit einem Bund mit einem Durchmesser über 80 mm, gekennzeichnet durch ein Lager mit einem Außenring entsprechend den Ansprüchen 1 bis 3.

# FIG. 1

# FIG. 2